# EUROPÄISCHE PATENTSCHRIFT

(11) **EP 1 921 703 B1**
(45) Veröffentlichungstag und Bekanntmachung des Hinweises auf die Patenterteilung: **07.04.2010**
(21) Anmeldenummer: 07033536.9
(22) Anmeldetag: 30.10.2007
(51) Int. Cl.: H01M 8/04

(54) **Brennstoffzellensystem mit Einrichtung zur Kathoden-Zuluft-Vorwärmung**
Fuel cell system with means for preheating cathode air
Système de piles à combustible ayant un dispositif pour préchauffer de l'air pour la cathode

(30) Priorität: 13.11.2006 DE 102006053429
(43) Veröffentlichungstag der Anmeldung: 14.05.2008
(73) Patentinhaber: Enerday GmbH, 82131 Stockdorf (DE)
(72) Erfinder: Käding, Stefan, 17309 Zerrenthin (DE); Günther, Norbert, 18311 Ribnitz-Damgarten (DE); Müller, Matthias, 17034 Neubrandenburg (DE)
(74) Vertreter: Schumacher & Willsau

(56) Entgegenhaltungen:
- EP-A- 1 387 427
- EP-A- 1 473 794
- DE-A1- 19 514 469
- DE-A1-102004 055 424
- US-A1- 2002 004 154
- US-A1- 2004 224 196
- US-A1- 2004 241 514

## Beschreibung

Die Erfindung betrifft ein Brennstoffzellensystem mit einem ersten Wärmeübertrager, über den Kathodenzuluft einer Brennstoffzelle oder einem Brennstoffzellenstapel zuführbar und dem ein Gemisch aus Nachbrennerabgas eines Nachbrenners und in der Brennstoffzelle oder dem Brennstoffzellenstapel entstandener Kathodenabluft zuführbar ist, um eine Wärmeübertragung zwischen der Kathodenzuluft und dem Gemisch zu ermöglichen.

DE 195 14 469 A1 beschreibt ein Brennstoffzellensystem, in welchem Kathodenzuluft in einem Wärmetauscher mit Kathodenabgas in thermischer Wechselwirkung steht und daraufhin in einem anderen Wärmetauscher von Brennerabgas aus einer Abgasleitung erhitzt wird.

US 2002/0004154 A1 und US 2004/0224196 A1 beschreiben Brennstoffzellensystem, in welchen die Kathodenzuluft mittels zweier in Serie geschalteter Wärmetauscher aufgeheizt wird. Das wärmespendende Medium ist Nachbrennerabgas, das zunächst einen Hochtemperaturwärmetauscher und dann einen Niedrigtemperaturwärmetauscher durchströmt.

EP 1 473 794 A1 beschreibt eine Anordnung zum Vorwärmen von Kathodenzuluft mittels eines ersten und eines zweiten Wärmetauschers.

DE 10 2004 055 424 A1 beschreibt ein Brennstoffzellensystem, in welchem Kathodenzuluft mittels zweier in Serie geschalteter Wärmetauscher erwärmt wird.

EP 1 387 427 A1 beschreibt ein Brennstoffzellensystem, in welchem die Kathodenzuluft über einen einzelnen Wärmetauscher mittels eines Nachbrennerabgasstromes vorgeheizt wird. Über ein Volumenstromteilerventil kann dem Wärmetauscher gleichzeitig Kathodenabluft zugeführt werden.

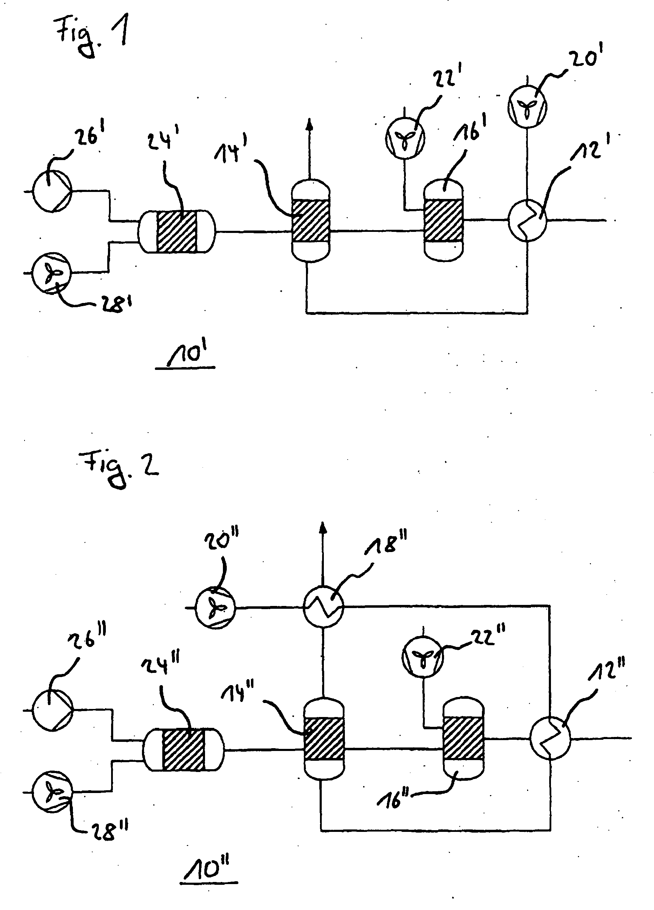

Brennstoffzellensysteme mit Wärmeübertragern beziehungsweise Wärmetauschern zur Kathodenzuluftvorheizung sind aus dem Stand der Technik allgemein bekannt. Ein Beispiel eines derartigen Brennstoffzellensystems ist schematisch in Figur 1 dargestellt. Das Brennstoffzellensystem 10' umfasst einen Brennstoffzellenstapel 14'. Der Brennstoffzellenstapel 14' ist anodeneingangsseitig mit einem Reformer 24' gekoppelt, so dass der Anodenseite des Brennstoffzellenstapels 14' ein wasserstoffangereichertes Reformat von dem Reformer 24' zuführbar ist. Zur Erzeugung des Reformats ist der Reformer 24' mit einer Brennstoffzuführeinrichtung 26' und einer Luftzuführeinrichtung 28' gekoppelt, über die dem Reformer 24' Brennstoff und Luft zuführbar sind. Weiterhin ist der Brennstoffzellenstapel 14' kathodeneingangsseitig über einen Wärmeübertrager 12' mit einer Kathodenzuluft- Zuführeinrichtung 20' gekoppelt, um der Kathodenseite des Brennstoffzellenstapels 14' Kathodenzuluft zuführen zu können. Um während eines Betriebs des Brennstoffzellenstapels 14' entstandenes abgereichtes Reformat abzuführen, ist der Brennstoffzellenstapel 14' darüber hinaus anodenausgangsseitig mit einem Nachbrenner 16' verbunden, der insbesondere dazu dient, Schadstoffe des abgereicherten Reformats zu verbrennen. Ferner führt der Brennstoffzellenstapel 14' während des Betriebs kathodenausgangsseitig Kathodenabluft beispielsweise in die Umgebung ab. Neben dem Brennstoffzellenstapel 14' ist der Nachbrenner 16' weiterhin mit einer Nachbrennerluftzuführeinrichtung 22' gekoppelt, über die der Nachbrenner 16' mit für die Verbrennung erforderlicher Nachbrennerluft versorgt werden kann. Zur Abführung während eines Nachbrennerbetriebs entstandenen Nachbrennerabgases ist der Nachbrenner 16' weiterhin über den Wärmeübertrager 12' mit der Umgebung gekoppelt. Der Wärmeübertrager 12' ermöglicht somit eine Wärmeübertragung zwischen dem Nachbrennerabgas und der Kathodenzuluft. Im Betrieb des bekannten Brennstoffzellensystems 10' wird die von der Kathodenzuluftzuführeinrichtung 20' geförderte Kathodenzuluft vor Erreichen des Brennstoffzellenstapels 14' durch den Wärmeübertrager 12' aufgrund der Wärmeübertragung von dem wärmeren, während der Verbrennung im Nachbrenner 16' entstandenen Nachbrennerabgas erwärmt. Durch dieses Brennstoffzellensystem 10' kann die Kathodenzuluft vor Erreichen des Brennstoffzellenstapels 14' auf einen Bereich von näherungsweise 600 bis 850°C erwärmt werden. Allerdings wird durch den Aufbau dieses Brennstoffzellensystems 10' eine Regelung, insbesondere eine Temperaturregelung der Kathodenzuluft, stark erschwert. Eine Möglichkeit besteht darin, die Kathodenzulufttemperatur über eine Variation eines Nachbrennerlambdawerts zu regeln. Der Lambdawert ist jedoch bei hohen Brennstoffzellenumsätzen und hohen Brennstoffzellensystemwirkungsgraden durch einen geringen Heizwert des abgereicherten Reformats begrenzt. Darüber hinaus geht über die Abführung der Kathodenabluft des Brennstoffzellenstapels 14' in die Umgebung sehr viel potentiell nutzbare Energie verloren.

Ein weiteres, dem Stand der Technik angehörendes Brennstoffzellensystem 10" mit zwei Wärmeübertragern 12", 18" zur Vorheizung der Kathodenzuluft ist in Figur 2 dargestellt, wobei Komponenten des Brennstoffzellensystems 10", die denen in Figur 1 entsprechen, mit ähnlichen Bezugszeichen bezeichnet sind. Daher wird auf eine Erläuterung dieser Komponenten verzichtet und lediglich auf die Unterschiede zu dem Brennstoffzellensystem 10' von Figur 1 eingegangen. Das Brennstoffzellensystem 10" gemäß Figur 2 unterscheidet sich von dem vorstehend erläuterten Brennstoffzellensystem 10' gemäß Figur 1 maßgeblich darin, dass ein zweiter Wärmeübertrager 18" vorgesehen ist, der insbesondere durch einen Rekuperator beziehungsweise Rohrbündelwärmeübertrager gebildet wird. Der zweite Wärmeübertrager 18" ist der Kathodenzuluftzuführeinrichtung 20" unmittelbar nachgeschaltet und dem ersten Wärmeübertrager 12" vorgeschaltet. Somit durchströmt die von der Kathodenzuluftzuführeinrichtung 20" geförderte Kathodenzuluft zunächst den zweiten Wärmeübertrager 18", bevor sie den ersten Wärmeübertrager 12" erreicht. Darüber hinaus ist der zweite Wärmeübertrager 18" katodenausgangseitig mit dem Brennstoffzellenstapel 14" gekoppelt, so dass über den zweiten Wärmeübertrager 18" die Kathodenabluft abführbar ist. Der zweite Wärmeübertrager 18" ermöglicht damit zusätzlich eine Wärmeübertragung zwischen der von dem Brennstoffzellenstapel 14" abgeführten Kathodenabluft und der von der Kathodenzuluftzuführeinrichtung 20" geförderten Kathodenzuluft. Vorteilhaft an dem Aufbau dieses Brennstoffzellensystems 10" ist, dass bei geringer Energie im Nachbrennerabgas und hohem Kathodenzuluftbedarf des Brennstoffzellenstapels 14" dennoch eine ausreichende Kathodenzulufttemperatur durch den zweiten Wärmeübertrager 18" zur Verfügung gestellt werden kann. Jedoch besteht der Nachteil dieses Aufbaus darin, dass das Nachbrennerabgas nicht mehr auf niedrige Temperaturen abkühlbar ist, da zumindest ein Teil der Energie des Brennstoffzellensystems 10" fortlaufend in der Kathodenzuluft erhalten wird. Dies führt beispielsweise dazu, wenn die Kathodenzulufttemperatur auf einem Niveau von 500°C gehalten wird, dass die Nachbrennerabgastemperatur mindestens ebenso im Bereich dieses Temperaturniveaus liegt.

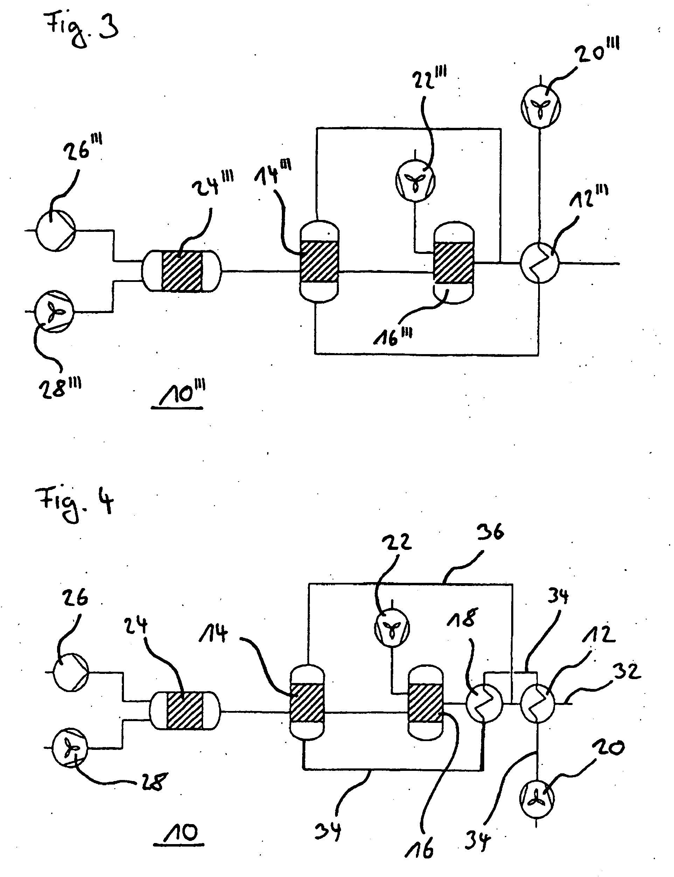

Ein weiteres Beispiel eines bekannten gattungsgemäßen Brennstoffzellensystems 10"' ist exemplarisch in Figur 3 dargestellt. In diesem Fall ist wie bei dem Beispiel von Figur 1 lediglich ein Wärmeübertrager 12"' auf die gleiche Weise vorgesehen. Jedoch wird bei dem Brennstoffzellensystem 10"' von Figur 3 die Kathodenabluft dem Nachbrennerabgas beigemischt, so dass dem Wärmeübertrager 12"' ein Gemisch aus zumindest Nachbrennerabgas und Kathodenabluft zuführbar ist. Ansonsten entspricht das Brennstoffzellensystem 10"' von Figur 3 dem von Figur 1. Durch diesen Aufbau wird auf noch effizientere Weise im Vergleich zu dem Brennstoffzellensystem 10" von Figur 2 die in der Kathodenabluft enthaltene Energie beziehungsweise Wärmeenergie im Brennstoffzellensystem 10"' erhalten. Jedoch besteht der Nachteil dieses Brennstoffzellensystems 10"' darin, dass sich unter Umständen die Aufheizzeit des Brennstoffzellensystems 10"' insbesondere während einer Startphase erheblich verlängern kann. Dies ist darin begründet, dass zumindest bei einem Startvorgang des Brennstoffzellensystems 10"' die Temperatur der den Wärmeübertrager 12"' durchströmenden Kathodenzuluft dadurch erheblich verringert wird, dass die zu diesem Zeitpunkt kalte beigemischte Kathodenabluft die Temperatur des Nachbrennerabgases deutlich senkt. Folglich wird auch die Wärmeübertragung in dem Wärmeübertrager 12"' herabsetzt.

Der Erfindung liegt daher die Aufgabe zugrunde, die gattungsgemäße Brennstoffzellensysteme derart weiterzubilden, dass mehr Energie in dem Brennstoffzellensystem zur Kathodenluftvorheizung erhalten werden kann, ohne die Aufheizzeit dabei über Gebühr zu verlängern.

Diese Aufgabe wird durch die Merkmale des unabhängigen Anspruchs gelöst.

Weitere vorteilhafte Ausgestaltungen und Weiterbildungen der Erfindung ergeben sich aus den abhängigen Ansprüchen.

Das erfindungsgemäße Brennstoffzellensystem baut auf dem gattungsgemäßen Stand der Technik dadurch auf, dass ein zweiter Wärmeübertrager vorgesehen ist, über den die Kathodenzuluft von dem ersten Wärmeübertrager der Brennstoffzelle oder dem Brennstoffzellenstapel zuführbar und über den das Nachbrennerabgas zur Bildung des Gemischs dem ersten Wärmeübertrager zuführbar ist, um eine Wärmeübertragung zwischen dem Nachbrennerabgas und der Kathodenzuluft zu ermöglichen. Die Kathodenabluft wird dem Nachbrennerabgas zwischen dem ersten und zweiten Wärmeübertrager beigemischt. Somit wird die in der Kathodenabluft vorhandene Wärmeenergie zumindest teilweise in dem Brennstoffzellensystem gehalten. Darüber hinaus wird gleichzeitig eine effizientere Vorheizung der Kathodenzuluft während der Startphase des Brennstoffzellensystems ermöglicht. So findet bereits eine Wärmeübertragung bei dem zweiten Wärmeübertrager zwischen ausschließlich dem Nachbrennerabgas und der Kathodenzuluft statt. Erst nachdem das Nachbrennerabgas den zweiten Wärmeübertrager durchströmt hat, wird die Kathodenabluft dem Nachbrennerabgas beigemischt. Somit wirkt sich eine Abkühlung des Nachbrennerabgases durch die Beimischung der Kathodenabluft nicht nachteilig auf die Kathodenzuluftvorheizung aus. Daher wird selbst in der Startphase des Brennstoffzellensystem die wenn auch geringe Wärmeenergie des Nachbrennerabgases genutzt, um die Kathodenzuluft vorzuheizen. Vorzugsweise werden der erste und zweite Wärmeübertrager derart ausgelegt, dass die Temperatur des zwischen den Wärmetauschern befindlichen Nachbrennerabgases in etwa der der Kathodenabluft entspricht. Um Wärmeenergieverluste in den Wärmeübertragern weitestgehend zu unterbinden, werden die Wärmeübertrager vorzugsweise derart ausgeführt, dass die im Vergleich zum Nachbrennerabgas oder dem Gemisch kältere Kathodenzuluft einen äußeren Bereich der Wärmeübertrager durchströmt. Hingegen durchströmen das Nachbrennerabgas oder das Gemisch einen inneren Bereich der Wärmeübertrager, so dass der äußere Bereich den inneren zumindest abschnittsweise umgibt.

Das erfindungsgemäße Brennstoffzellensystem kann in vorteilhafter Weise dadurch weitergebildet sein, dass der Brennstoffzelle oder dem Brennstoffzellenstapel die Kathodenzuluft weiterhin unter Umgehung von zumindest einem der Wärmeübertrager zuführbar ist. Dadurch kann dem Brennstoffzellenstapel oder der Brennstoffzelle gezielt kalte und/oder durch die Wärmeübertrager erhitzte Kathodenzuluft zugeführt werden. Somit kann eine Regelung oder Steuerung der Kathodenzulufttemperatur vorgenommen werden.

In diesem Zusammenhang ist es besonders vorteilhaft, das erfindungsgemäße Brennstoffzellensystem so auszubilden, dass ein Kathodenzuluftvolumenstrom zu dem ersten Wärmeübertrager und ein Kathodenzuluftvolumenstrom zu der Brennstoffzelle oder dem Brennstoffzellenstapel unter Umgehung von zumindest einem der Wärmeübertrager über ein Volumenstromteilerventil regelbar sind. Durch das Volumenstromteilerventil können entsprechend der gewünschten Kathodenzulufteingangstemperatur die jeweiligen Volumenströme eingestellt werden. Voraussetzung für die Regelung der Kathodenzulufteingangstemperatur durch das Volumenstromteilerventil ist unter anderem weiterhin die Kenntnis des Wärmeeintrags beziehungsweise Wärmeenergieeintrags in die Kathodenzuluft bei dem ersten und zweiten Wärmeübertrager sowie die Kenntnis der Temperatur der zugeführten Kathodenzuluft.

Weiterhin kann das erfindungsgemäße Brennstoffzellensystem vorzugsweise derart verwirklicht werden, dass ein Steuergerät zur Ansteuerung des Volumenstromteilerventils vorgesehen ist, mittels dem eine Temperatur der in die Brennstoffzelle oder den Brennstoffzellenstapel eintretenden Kathodenzuluft regelbar ist. Das Steuergerät ermittelt vorzugsweise die zur Regelung der Kathodenzulufteingangstemperatur erforderlichen Parameter, die dem Steuergerät beispielsweise durch Sensoren zur Verfügung gestellt werden, und führt basierend auf diesen Parametern Regelungsberechnungen aus.

Bevorzugte Ausführungsformen der Erfindung werden nachfolgend anhand der Figuren beispielhaft erläutert.

Es zeigen:
- Figur 1: eine Darstellung eines bekannten Brennstoffzellensystems;
- Figur 2: eine Darstellung eines weiteren bekannten Brennstoffzellensystems;
- Figur 3: eine Darstellung eines weiteren bekannten Brennstoffzellensystems;
- Figur 4: eine Darstellung eines erfindungsgemäßen Brennstoffzellensystems gemäß einem ersten Ausführungsbeispiel der Erfindung; und
- Figur 5: eine Darstellung eines erfindungsgemäßen Brennstoffzellensystems gemäß einem zweiten Ausführungsbeispiel der Erfindung.

Figur 4 zeigt eine Darstellung eines erfindungsgemäßen Brennstoffzellensystems 10 gemäß einem ersten Ausführungsbeispiel der Erfindung. Das Brennstoffzellensystem 10 umfasst einen Brennstoffzellenstapel 14 mit beliebig vielen Brennstoffzellen. Alternativ kann das Brennstoffzellensystem 10 aber auch eine einzige Brennstoffzelle umfassen. Der Brennstoffzellenstapel 14 ist anodeneingangsseitig mit einem Reformer 24 gekoppelt, der dazu dient, dem Brennstoffzellenstapel 14 ein wasserstoffangereichertes Reformat anodeneingangsseitig zur Verfügung zu stellen. Zu diesem Zweck ist der Reformer 24 an dessen Eingangsseite mit einer Brennstoffzuführeinrichtung 26 und einer Luftzuführeinrichtung 28 gekoppelt. Über die Brennstoffzuführeinrichtung 26 und die Luftzuführeinrichtung 28 wird eine Zufuhr von Brennstoff und Luft zur Eingangsseite des Reformers 24 ermöglicht, welche in dem Reformer 24 ein Brennstoff/Luft-Gemisch ausbilden und in einem Betrieb des Reformers 24 zu Reformat umgesetzt werden können. Weiterhin ist der Brennstoffzellenstapel 14 anodenausgangsseitig mit einem Nachbrenner 16 gekoppelt, dem während eines Betriebs des Brennstoffzellenstapels 14 entstandenes wasserstoffabgereichertes Reformat zuführbar ist. Der Nachbrenner 16 dient insbesondere dazu, eine möglichst vollständige Verbrennung des abgereicherten Reformats durchzuführen. Zu diesem Zweck ist eine Nachbrennerluftzuführeinrichtung 22 vorgesehen, die wie der Brennstoffzellenstapel 14 eingangseitig mit dem Nachbrenner 16 gekoppelt ist und zur Brennluftzuführung in den Nachbrenner 16 dient. Somit wird durch den Nachbrenner 16 ermöglicht, ein weitestgehend schadstofffreies Nachbrennerabgas an einer Ausgangsseite des Nachbrenners 16 über eine Nachbrennerabgasleitung 32 abzuführen. Die Nachbrennerabgasleitung 32, die ausgangsseitig mit dem Nachbrenner 16 gekoppelt ist, durchläuft zwei Wärmeübertrager 18 und 12, worauf nachstehend näher eingegangen wird. Der Brennstoffzellenstapel 14 ist darüber hinaus kathodeneingangsseitig über eine Kathodenzuluftleitung 34 mit einer Kathodenzuluftzuführeinrichtung 20 gekoppelt. Die Kathodenzuluftleitung 34 durchläuft ebenso wie die Nachbrennerabgasleitung 32 die zwei Wärmeübertrager 18 und 12, wobei sie zunächst den ersten Wärmeübertrager 12 und anschließend den zweiten Wärmeübertrager 18 in Richtung zu dem Brennstoffzellenstapel 14 durchläuft. Im Falle der Nachbrennerabgasleitung 32 ist die Abfolge umgekehrt, das heißt die Nachbrennerabgasleitung 32 durchläuft zunächst den zweiten Wärmeübertrager 18 und anschließend den ersten Wärmeübertrager 12, bevor das Nachbrennerabgas beispielsweise in die Umgebung abgeführt wird. Des Weiteren ist der Brennstoffzellenstapel 14 kathodenausgangsseitig über eine Kathodenabluftleitung 36 mit der Nachbrennerabgasleitung 32 gekoppelt. Dabei mündet die Kathodenabluftleitung 36 zwischen dem ersten und zweiten Wärmeübertrager 12 und 18 in die Nachbrennerabgasleitung 32.

Nachstehend wird die Betriebsweise des erfindungsgemäßen Brennstoffzellensystems 10 näher beschrieben. Zunächst wird auf einen Normalbetrieb des Brennstoffzellensystems 10 eingegangen. In diesem Betrieb können der Brennstoffzellenstapel 14 und der Nachbrenner 16 jeweils Kathodenabluft und Nachbrennerabgas mit entsprechender Temperatur liefern, so dass eine Kathodenzuluftvorheizung anhand der Kathodenabluft und des Nachbrennerabgases vorgenommen werden kann. Das heißt sowohl die Kathodenabluft als auch das Nachbrennerabgas enthalten ausreichend Wärmeenergie zum Vorheizen der Kathodenzuluft. Anschließend wird auf einen Startbetrieb des erfindungsgemäßen Brennstoffzellensystems 10 eingegangen. Bei dem Startbetrieb beziehungsweise der Startphase liefert insbesondere die Kathodenabluft äußerst wenig Wärmeenergie, weist demnach also lediglich eine sehr geringe Temperatur auf und kühlt das Nachbrennerabgas dadurch bei der Beimischung stark ab.

Im Normalbetrieb des Brennstoffzellensystems 10 wird dem Reformer 24 von der Brennstoffzuführeinrichtung 26 Brennstoff und von der Luftzuführeinrichtung 28 Luft zugeführt. Daraus wird im Reformer 24 ein Brennstoff/Luft-Gemisch erzeugt, das im Reformer 24 zu wasserstoffreichem Reformat umgesetzt und anschließend abgeführt wird. Das wasserstoffangereicherte Reformat gelangt schließlich zu der Anodeneingangsseite des Brennstoffzellenstapels 14. Weiterhin wird der Kathodeneingangsseite des Brennstoffzellenstapels 14 über die Kathodenzuluftleitung 34 Kathodenzuluft durch die Kathodenzuluftzuführeinrichtung 20 zugeführt. Dadurch laufen in dem Brennstoffzellenstapel 14 die allgemein bekannten elektrochemischen Reaktionen zur Erzeugung von elektrischer Energie ab, worauf nicht näher eingegangen wird. Durch die elektrochemischen Reaktionen entsteht anodenausgangsseitig des Brennstoffzellenstapels 14 abgereichertes Reformat, das dem Nachbrenner 16 von dem Brennstoffzellenstapel 14 zugeführt wird. Unter Zufuhr von Nachbrennerluft beziehungsweise Brennluft in den Nachbrenner 16 von der Nachbrennerluftzuführeinrichtung 22 findet eine Verbrennung des Gemisches aus abgereichertem Reformat und Brennluft in dem Nachbrenner 16 statt. Dadurch entsteht heißes Nachbrennerabgas, das über die Nachbrennerabgasleitung 32 abgeführt wird. Das heiße Nachbrennerabgas durchströmt dabei den zweiten und ersten Wärmeübertrager 18, 12. Dadurch findet eine Wärmeübertragung auf die gewöhnlich kältere Kathodenzuluft statt, die über die Kathodenzuluftleitung 34 ebenso den ersten und zweiten Wärmeübertrager 12 und 18 durchströmt. Somit wird die Wärmeenergie des Nachbrennerabgases zumindest teilweise (entsprechend einem Temperaturunterschied, Wärmekapazitäten der Medien etc.) auf die Kathodenzuluft übertragen, die anschließend dem Brennstoffzellenstapel 14 zugeführt wird. Dadurch wird die Kathodenzuluftvorheizung bewerkstelligt. Darüber hinaus wird die während des Betriebs des Brennstoffzellenstapels 14 entstandene Kathodenabluft kathodenausgangsseitig über die Kathodenabluftleitung 36 abgeführt. Insbesondere wird die Kathodenabluft zwischen dem ersten und zweiten Wärmeübertrager 12 und 18 dem Nachbrennerabgas beigemischt, wodurch zusätzlich die während des Betriebs des Brennstoffzellenstapels 14 in der Kathodenabluft gehaltene Energie teilweise in dem Brennstoffzellensystem 10 gehalten wird. Dadurch werden sowohl die in dem Nachbrennerabgas als auch die in der Kathodenabluft enthaltene Energie beziehungsweise Wärmeenergie zumindest teilweise auf die Kathodenzuluft in der Kathodenzuluftleitung 34 übertragen.

Im Startbetrieb des Brennstoffzellensystems 10 beziehungsweise während des Aufheizvorgangs des Brennstoffzellensystems 10 liegt in dem Nachbrennerabgas zunächst weniger Wärmeenergie vor. Ebenso weist die Kathodenabluft wenig Wärmeenergie auf und führt bei der Beimischung in das Nachbrennerabgas während des Startbetriebs zu insgesamt einer Abkühlung des Gasgemischs. Wäre der zweite Wärmeübertrager 18 (wie in Figur 3 des bekannten Brennstoffzellensystem 10''') nicht vorhanden, so würde die durch die Kathodenabluftleitung 36 beigemischte und noch aufgrund des Startbetriebs kühle Kathodenabluft sich mit dem Nachbrennerabgas vermischen, wobei die Temperatur des Gemisches zu diesem Zeitpunkt geringer als die des Nachbrennerabgases ausfallen würde. Da der zweite Wärmeübertrager 18 vorgesehen ist, wird zumindest einen Teil der Wärmenergie des wenn auch noch kälteren Nachbrennerabgases auf die Kathodenzuluft in der Kathodenzuluftleitung 34 übertragen. Erst nach Durchlaufen des zweiten Wärmeübertragers 18 wird die Kathodenabluft über die Kathodenabluftleitung 36 dem Nachbrennerabgas beigemischt. Dadurch wird dem Nachbrennerabgas bereits vor einer möglichen Abkühlung durch die Kathodenabluft Wärmeenergie entzogen und zur Vorheizung der Kathodenzuluft verwendet.

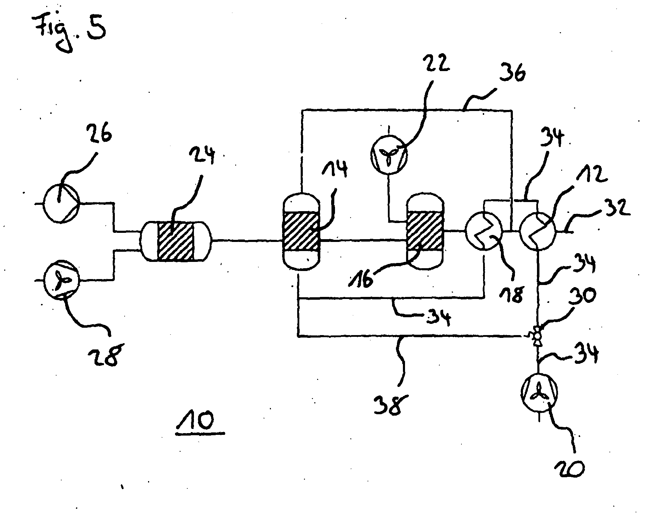

Figur 5 zeigt eine Darstellung eines erfindungsgemäßen Brennstoffzellensystems gemäß einem zweiten Ausführungsbeispiel der Erfindung. Zur Vermeidung von Wiederholungen wird bei der Beschreibung des zweiten Ausführungsbeispiels lediglich auf die Unterschiede zu dem ersten Ausführungsbeispiel eingegangen. Das Brennstoffzellensystem des zweiten Ausführungsbeispiels unterscheidet sich von dem des ersten Ausführungsbeispiels darin, dass an der Kathodenzuluftleitung 34 zwischen der Kathodenzuluftzuführeinrichtung 20 und dem ersten Wärmeübertrager 12 ein Volumenstromteilerventil 30 vorgesehen ist, das eine direkte Kopplung unter Umgehung des ersten und zweiten Wärmeübertragers 12 und 18 mit dem Brennstoffzellenstapel 14 über eine zweite Kathodenzuluftleitung 38 herstellen kann. Über eine Verstellung des Volumenstromteilerventils 30 kann unter anderem die Kathodenzulufteingangstemperatur geregelt oder gesteuert werden, indem die Volumenströme der Kathodenzuluft in der Kathodenzuluftleitung 34 und in der zweiten Kathodenzuluftleitung 38 eingestellt werden. Voraussetzung für die Regelung kann unter anderem weiterhin die Kenntnis des Wärmeenergieeintrags in die Kathodenzuluft bei dem ersten und zweiten Wärmeübertrager 12 und 18 sowie die Kenntnis der Temperatur der durch die Kathodenzuführeinrichtung 20 zugeführten Kathodenzuluft sein. Beispielsweise kann ein nicht dargestelltes, dem Fachmann bekanntes Steuergerät vorgesehen sein, das die Ansteuerung des Volumenstromteilerventils 30 übernimmt und die entsprechenden zur Regelung der Kathodenzulufteingangstemperatur erforderlichen Parameter anhand von Sensoren und/oder Modellen ermittelt und entsprechende Berechnungen zur Regelung der Kathodeneingangstemperatur anstellt.

Alternativ kann die zweite Kathodenzuluftleitung 38 unter Umgehung des ersten Wärmeübertragers 12 mit der Kathodenzuluftleitung 34 zwischen dem ersten und zweiten Wärmeübertrager 12 und 18 gekoppelt sein.

Die in der vorstehenden Beschreibung, in den Zeichnungen sowie in den Ansprüchen offenbarten Merkmale können sowohl einzeln als auch in beliebiger Kombination für die Verwirklichung der Erfindung wesentlich sein.

### Bezugszeichenliste:

- 10': Brennstoffzellensystem
- 12': Wärmeübertrager
- 14': Brennstoffzellenstapel
- 16': Nachbrenner
- 20': Kathodenzuluftzuführeinrichtung
- 22': Nachbrennerluftzuführeinrichtung
- 24': Reformer
- 26': Brennstoffzuführeinrichtung
- 28': Luftzuführeinrichtung
- 10": Brennstoffzellensystem
- 12": Wärmeübertrager
- 14": Brennstoffzellenstapel
- 16": Nachbrenner
- 18": zweiter Wärmeübertrager
- 20": Kathodenzuluftzuführeinrichtung
- 22": Nachbrennerluftzuführeinrichtung
- 24": Reformer
- 26": Brennstoffzuführeinrichtung
- 28": Luftzuführeinrichtung
- 10"': Brennstoffzellensystem
- 12"': Wärmeübertrager
- 14"': Brennstoffzellenstapel
- 16"': Nachbrenner
- 20"': Kathodenzuluftzuführeinrichtung
- 22"': Nachbrennerluftzuführeinrichtung
- 24"': Reformer
- 26"': Brennstoffzuführeinrichtung
- 28"': Luftzuführeinrichtung
- 10: Brennstoffzellensystem
- 12: erster Wärmeübertrager
- 14: Brennstoffzellenstapel
- 16: Nachbrenner
- 18: zweiter Wärmeübertrager
- 20: Kathodenzuluftzuführeinrichtung
- 22: Nachbrennerluftzuführeinrichtung
- 24: Reformer
- 26: Brennstoffzuführeinrichtung
- 28: Luftzuführeinrichtung
- 30: Volumenstromteilerventil
- 32: Nachbrennerabgasleitung
- 34: Kathodenzuluftleitung
- 36: Kathodenabluftleitung
- 38: zweite Kathodenzuluftleitung

## Patentansprüche

1. Brennstoffzellensystem (10) mit einem ersten Wärmeübertrager (12), über den Kathodenzuluft einer Brennstoffzelle oder einem Brennstoffzellenstapel (14) zuführbar und dem ein Gemisch aus Nachbrennerabgas eines Nachbrenners (16) und in der Brennstoffzelle oder dem Brennstoffzellenstapel (14) entstandener Kathodenabluft zuführbar ist, um eine Wärmeübertragung zwischen der Kathodenzuluft und dem Gemisch zu ermöglichen, wobei ein zweiter Wärmeübertrager (18) vorgesehen ist, über den die Kathodenzuluft von dem ersten Wärmeübertrager der Brennstoffzelle oder dem Brennstoffzellenstapel (14) zuführbar und über den das Nachbrennerabgas zur Bildung des Gemischs dem ersten Wärmeübertrager (12) zuführbar ist, um eine Wärmeübertragung zwischen dem Nachbrennerabgas und der Kathodenzuluft zu ermöglichen.

2. Brennstoffzellensystem (10) nach Anspruch 1, **dadurch gekennzeichnet, dass** der Brennstoffzelle oder dem Brennstoffzellenstapel (14) die Kathodenzuluft weiterhin unter Umgehung von zumindest einem der Wärmeübertrager (12, 18) zuführbar ist.

3. Brennstoffzellensystem (10) nach Anspruch 2, **dadurch gekennzeichnet, dass** ein Kathodenzuluftvolumenstrom zu dem ersten Wärmeübertrager (12) und ein Kathodenzuluftvolumenstrom zu der Brennstoffzelle oder dem Brennstoffzellenstapel (14) unter Umgehung von zumindest einem der Wärmeübertrager (12, 18) über ein Volumenstromteilerventil (30) regelbar sind.

4. Brennstoffzellensystem (10) nach Anspruch 3, **dadurch gekennzeichnet, dass** ein Steuergerät zur Ansteuerung des Volumenstromteilerventils (30) vorgesehen ist, mittels dem eine Temperatur der in die Brennstoffzelle oder den Brennstoffzellenstapel (14) eintretenden Kathodenzuluft regelbar ist.

## Claims

1. A fuel cell system (10) including a first heat exchanger (12) via which cathode feed air can be supplied to a fuel cell or fuel cell stack (14) and to which a mixture of afterburner exhaust gas of an afterburner (16) and cathode exhaust air having materialized in the fuel cell or fuel cell stack (14) can be supplied for heat exchange between the cathode feed air and the mixture, wherein a second heat exchanger (18) is provided via which cathode feed air can be supplied from the first heat exchanger to the fuel cell or fuel cell stack (14) and via which the afterburner exhaust gas can be supplied to the first heat exchanger (12) to form the mixture, in thus achieving a heat exchange between the afterburner exhaust gas and the cathode feed air.

2. The fuel cell system (10) as set forth in claim 1, **characterized in that** the fuel cell or fuel cell stack (14) can be supplied with cathode feed air in bypassing at least one of the heat exchangers (12, 18).

3. The fuel cell system (10) as set forth in claim 2, **characterized in that** closed loop control of a cathode feed air flow to the first heat exchanger (12) and of a cathode feed air flow to the fuel cell or fuel cell stack (14) in bypassing at least one of the heat exchangers (12, 18) is possible via a flow divider valve (30).

4. The fuel cell system (10) as set forth in claim 3, **characterized in that** a controller is provided for controlling the flow divider valve (30), by means of which closed loop control of a temperature of the cathode feed air entering the fuel cell or fuel cell stack (14) is provided.

## Revendications

1. Système de piles à combustible (10) comportant un premier échangeur thermique (12) par lequel de l'air cathode entrant peut être amené à une pile à combustible ou à un bloc de piles à combustible (14) et auquel peut être amené un mélange de gaz d'échappement d'une chambre de post-combustion (16) et d'air cathode sortant formé dans la pile à combustible ou dans le bloc de piles à combustible (14), afin de permettre un échange thermique entre l'air cathode entrant et le mélange, et comportant un deuxième échangeur thermique (18) par lequel l'air cathode entrant peut être amené du premier échangeur thermique à la pile à combustible ou au bloc de piles à combustible (14) et par lequel le gaz d'échappement de la chambre de post-combustion peut être amené au premier échangeur thermique (12) pour la formation du mélange, afin de permettre un échange thermique entre le gaz d'échappement de la chambre de post-combustion et l'air cathode entrant.

2. Système de piles à combustible (10) selon la revendication 1, **caractérisé en ce que** l'air cathode entrant peut être amené à la pile à combustible ou au bloc de piles à combustible (14) tout en évitant au moins l'un des échangeurs thermiques (12, 18).

3. Système de piles à combustible (10) selon la revendication 2, **caractérisé en ce qu'**un flux volumique d'air cathode entrant vers le premier échangeur thermique (12) et un flux volumique d'air cathode entrant vers la pile à combustible ou vers le bloc de piles à combustible (14) est réglable au moyen d'une valve diviseur de débit volumique (30) tout en évitant au moins l'un des échangeurs thermiques (12, 18).

4. Système de piles à combustible (10) selon la revendication 3, **caractérisé en ce qu'**un dispositif de contrôle pour contrôler la valve diviseur de débit volumique (30) est prévu, au moyen duquel une température de l'air cathode entrant qui entre dans la pile à combustible ou dans le bloc de piles à combustible (14) est réglable.
